**Europäisches Patentamt**

**European Patent Office**

**Office européen des brevets**

(19)

(11) Veröffentlichungsnummer: **0 317 870 B1**

## EUROPÄISCHE PATENTSCHRIFT

(12)

(45) Veröffentlichungstag der Patentschrift: **03.02.93**

(51) Int. Cl.⁵: $H02P\ 7/62$, $G05B\ 21/02$

(21) Anmeldenummer: **88118982.3**

(22) Anmeldetag: **14.11.88**

(54) Verfahren und Vorrichtung zur Berechnung einer differentiellen Funktion.

(30) Priorität: **27.11.87 DE 3740356**

(43) Veröffentlichungstag der Anmeldung:
**31.05.89 Patentblatt 89/22**

(45) Bekanntmachung des Hinweises auf die
Patenterteilung:
**03.02.93 Patentblatt 93/05**

(84) Benannte Vertragsstaaten:
**CH DE FR GB LI SE**

(56) Entgegenhaltungen:
**EP-A- 0 127 158**

**ELEKTROTECHNIK, Band 63, Nr. 7, 13. April
1981, Seiten 20-22, Würzburg, DE; E. DITT-
MAR: "Analog und digital gekoppelt"**

**IDEM**

**REGELUNGSTECHNIK, Band 24, Nr. 6, Juni
1976, Seiten 181-188, A. REINER et al.:
"Überblick über Algorithmen zur digitalen
Regelung"**

(73) Patentinhaber: **SIEMENS AKTIENGESELL-
SCHAFT
Wittelsbacherplatz 2
W-8000 München 2(DE)**

(72) Erfinder: **Reng, Leonhard
Dr.-Wölfel-Strasse 4
W-8522 Herzogenaurach(DE)**

**Beschreibung**

Die Erfindung betrifft ein Verfahren und eine Vorrichtung zur Bildung eines aus zwei Signalen x und y (unter Berücksichtigung eines vorgegebenen Parameters b≠o) abgeleiteten, der differentiellen Funktion x + b . dy/dt entsprechenden Signals.

Die Aufgabenstellung und Lösung, die der vorliegenden Erfindung zugrunde liegt, sei an dem bevorzugten Ausführungsbeispiel eines EMK-Rechners für die feldorientierte Steuerung einer Drehfeldmaschine beschrieben. Ein derartiger EMK-Rechner wird benötigt, wenn ein den Fluß in der Drehfeldmaschine beschreibender Vektor als Integral des EMK-Vektors ermittelt werden soll, wobei auch die Ständerströme und Ständerspannungen als Vektoren aufgefaßt werden. Die feldparallele bzw. feldsenkrechte Komponente des Ständerstromvektors der Maschine ist dabei dem Fluß bzw. dem Drehmoment proportional und wird daher durch einen entsprechenden Sollwert vorgegeben. Die Richtung des Flußvektors bzw. die Richtung des praktisch zum Fluß senkrechten EMK-Vektors wird dann benötigt, um durch Transformation und Regelung aus den feldorientierten Sollwerten die ständerorientierten Steuergrößen eines die Maschine speisenden Umrichters zu bilden.

Da die EMK ihrerseits durch die Ständerspannung, abzüglich des ohmschen Spannungsabfalls (Widerstand R) und der Streuspannung (Streuinduktivität L) ist, kann der EMK-Vektor $\underline{e}$ und der Flußvektor $\underline{\psi}$ aus dem Spannungsvektor $\underline{u}$ und dem Stromvektor $\underline{i}$ gemäß den Vektorbeziehungen

$$\underline{e} = \underline{u} - R . \underline{i} - L . (d\underline{i}/dt)$$
$$\underline{\psi} = \int \underline{e} . dt$$

berechnet werden. Jede Komponente des EMK-Vektors berechnet sich also nach einer mathematischen Funktion

$$z = (a_0 x_0 + a_1 x_1 + ...) + \frac{d}{dt} (b_0 x_0 + b_1 x_1 + ...),$$

deren Berechnung sich auf die Bildung eines der Funktion

$$x + b . dy/dt$$

entsprechenden, aus x und y abgeleiteten Signals reduziert, wobei die Signale x und y insbesondere Istwerte oder Sollwerte von Zustandsgrößen einer Maschine sind, für deren Steuerung das abgeleitete Signal benötigt wird. Dabei kann x = y oder x ≠ y sein.

Eine feldorientierte Regelung, die auf einer derartigen Berechnung der EMK beruht, ist in der deutschen Offenlegungsschrift 34 18 641 beschrieben. Dort wird anstelle der Größe z eine Größe $\bar{z}$ ermittelt, die mittels eines Integrators mit der Integrationszeit T und einer Rückführungsleitung berechnet wird gemäß der Formel

$$\bar{z} = \frac{1}{T} \int_T (x - \bar{z}) dt + \frac{b . y}{T}$$

Die Größe z ist dabei mathematisch die mit einem Glättungszeitverhalten 1/(1 + sT) geglättete Größe z, sofern es sich bei den Signalen x, y und dem Integral um Momentanwerte handelt. Diese Schaltung ist an sich für die technische Integration geeignet, da sie nur einen geringen Aufwand für die (unvermeidliche) Glättung erfordert und ohne einen eigenen Differenzierer auskommt.

Für die digitale Berechnung in einem Mikrorechner ergeben sich jedoch Abtastfehler, da anstelle von kontinuierlich veränderlichen Momentanwerten nur diskontinuierlich abgetastete Werte verarbeitet bzw. rückgeführt werden. Um diese Abtastfehler klein zu halten, kann ein hoher Abtast- und Rechentakt verwendet werden; der Mikrorechner steht dann für weitere, umfangreichere Berechnungen nicht mehr zur Verfügung.

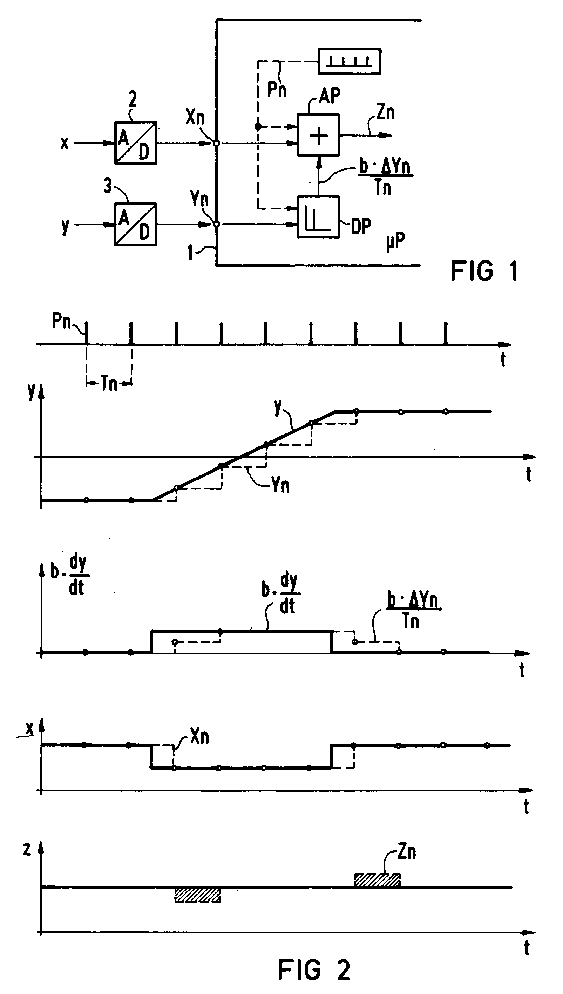

Bei Digitalrechnern wird häufig ein Differentialquotient in erster Näherung durch einen Differenzenquotienten ersetzt, da dieser mit wenigen Programmschritten errechnet werden kann. Wird daher die Größe z näherungsweise mittels eines addierenden Programmteils AP und eines Differenzen bildenden Programmteils DP berechnet, so ergibt sich die in FIG 1 gezeigte Anordnung, bei der ein Mikrorechner 1 die digitalisierten Momentanwerte Xn und Yn auswertet, die von entsprechenden Signalwandlern 2 und 3 aus

2

den Signalen x und y gebildet und im Takt einer Abtastfrequenz Pn (Periode Tn) abgetastet werden. Aus diesen diskontinuierlich abgetasteten Digitalwerten Xn und Yn bildet dann der Programmteil DP den Differenzenquotienten b . ($\Delta$Yn/Tn) und der Programmteil AP den der Funktion z zugeordneten errechneten Wert Zn = Xn + b($\Delta$Yn/Tn), wobei mit $\Delta$Yn die Differenz der beiden zuletzt abgetasteten Momentanwerte Yn bezeichnet ist.

FIG 2 zeigt in ausgezogenen Linien einen Verlauf der tatsächlichen Signale x, y und der Funktionen b . $\frac{dy}{dt}$ und z, während die durchbrochenen Linien angeben, welche Werte mittels des Taktes Pn abgetastet und jeweils bis zur nächsten Abtastung zur Verfügung gestellt werden.

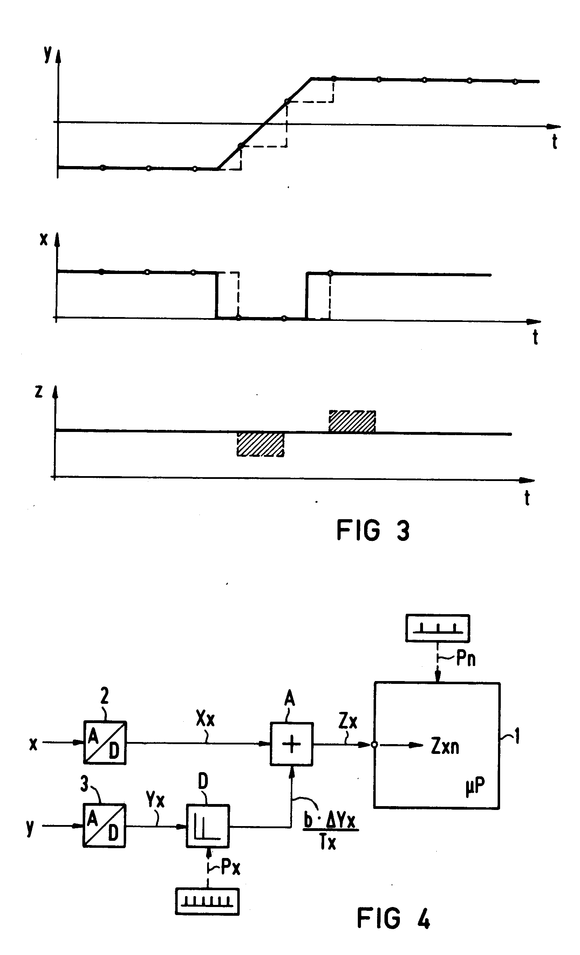

Man erkennt nun in FIG 2, daß der Ersatz des Differentialquotienten dy/dt durch den Differenzenquotienten $\Delta$Yn/Tn zu einem Näherungsfehler führt, der sich als Fehlbestimmung des der Funktion z entsprechenden Wertes Zn bemerkbar macht und entsprechend der in FIG 2 schraffierten Fläche für die Dauer eines Abtasttaktes erhalten bleibt. Dieser Fehler wird umso deutlicher, je mehr die Frequenzen, in denen sich x und y ändern, sich der Abtastfrequenz Pn nähern (FIG 3).

Um diesen Fehler zu verringern, muß einerseits der Näherungsfehler für den Differentialquotienten verringert, andererseits das Zeitraster der Abtastung, d.h. die zeitliche Auflösung bei der Abtastung der Momentanwerte, verfeinert werden. Dies bedeutet insbesondere eine Erhöhung des Taktes Pn. Dieser ist aber begrenzt durch den Rechenaufwand, der im Programmteil $\mu$ P des Rechners 1 für die Weiterverarbeitung der Größe Zn und die Steuer- und Regelalgorithmen erforderlich ist. Für schnelle dynamische Änderungen kann es daher erforderlich erscheinen, die Berechnung der Funktion z auch hard-ware-mäßig vom Rechner 1 zu trennen.

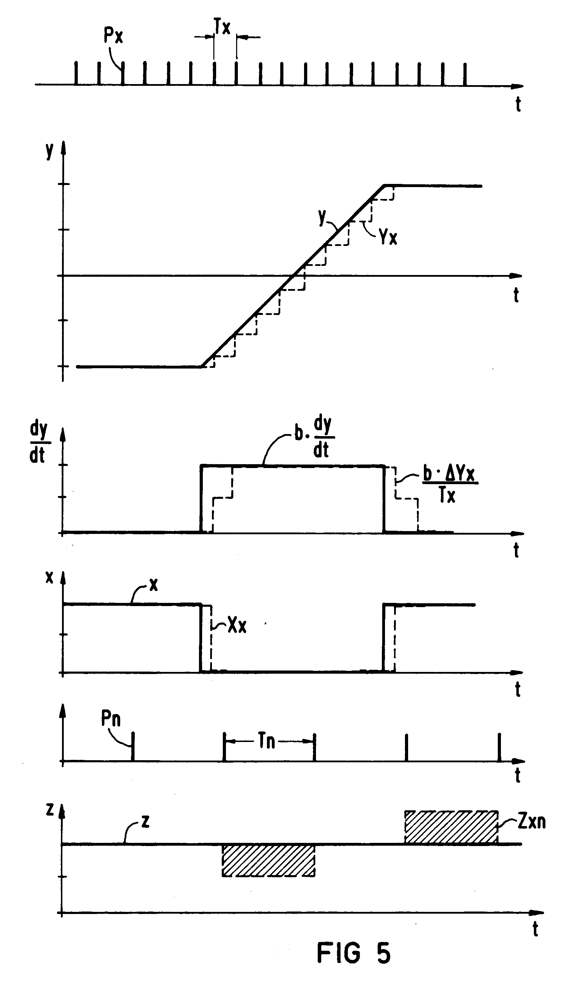

Eine derartige Anordnung ist in FIG 4 gezeigt, bei dem im Takt eines Taktsignals Px (Periode Tx) die digitalisierten Momentanwerte Yx des Signals y in einen Differenzenbildner D eingelesen werden, der an seinem Ausgang die der Differenz $\Delta$Yx der zuletzt eingelesenen Werte Yx entsprechende Größe b . $\Delta$Yx/Tx bereitstellt. Selbst wenn man voraussetzt, daß die Signalwandler 2 und 3 die Momentanwerte Xx und Yx der Signale X und Y zum Zeitpunkt der Px-Taktflanken bereitstellen und ein entsprechender Addierer A den entsprechenden Differenzenquotienten b . $\Delta$Yx/Tx ohne weitere Zeitverschiebung zu den abgeleiteten Digitalwerten Zx zusammensetzt, so ergibt sich, wie FIG 5 zeigt, daß allein durch den Rechnertakt Pn, mit dem jeweils die Werte Zxn der Eingangsvariablen Zx in den Rechner eingelesen werden, die in FIG 4 als schraffierte Fläche dargestellten Signalfehler entstehen.

Signalumsetzer, die in einem Umsetzungstakt aus einem Analogsignal ein Digitalsignal bilden, enthalten häufig einen mit dem Analogsignal frequenzgesteuerten Oszillator, dessen während eines Umsetzungstaktes erzeugte Impulse in einem nachfolgenden Integrator gezählt werden. Das Digitalsignal entspricht dann dem über die Umsetzungsperiode gemittelten Wert des Analogsignals. Sofern daher der Umsetzungstakt so hoch gewählt ist, daß sich während einer Taktperiode das Analogsignal nur wenig ändert, kann der Digitalwert gleich dem digitalisierten Momentanwert des Analogsignals gesetzt werden.

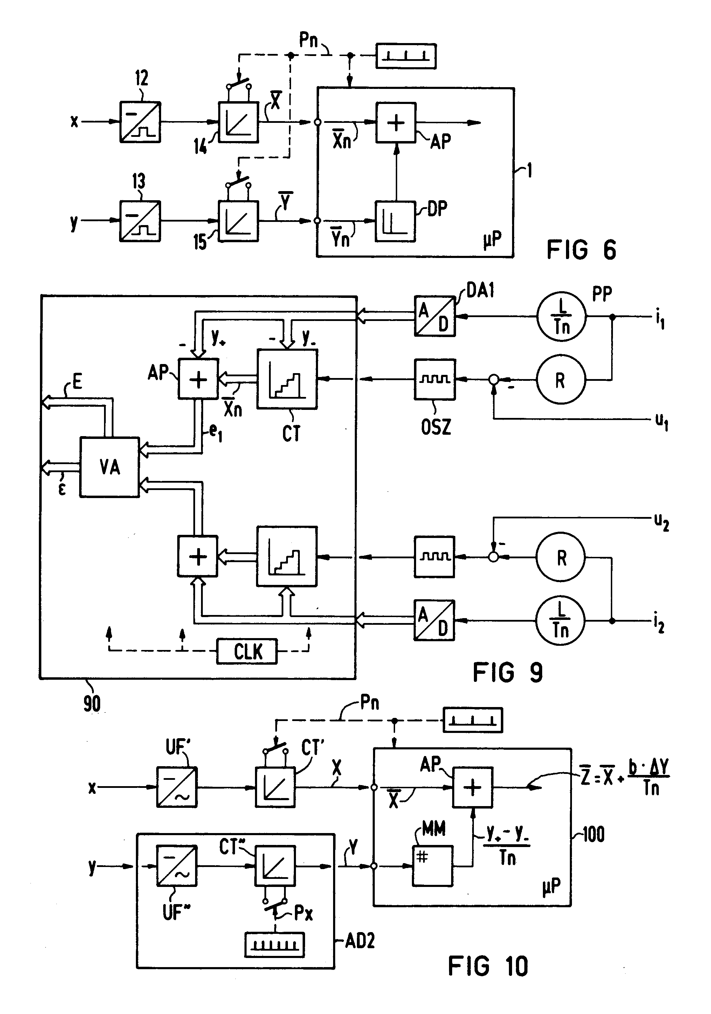

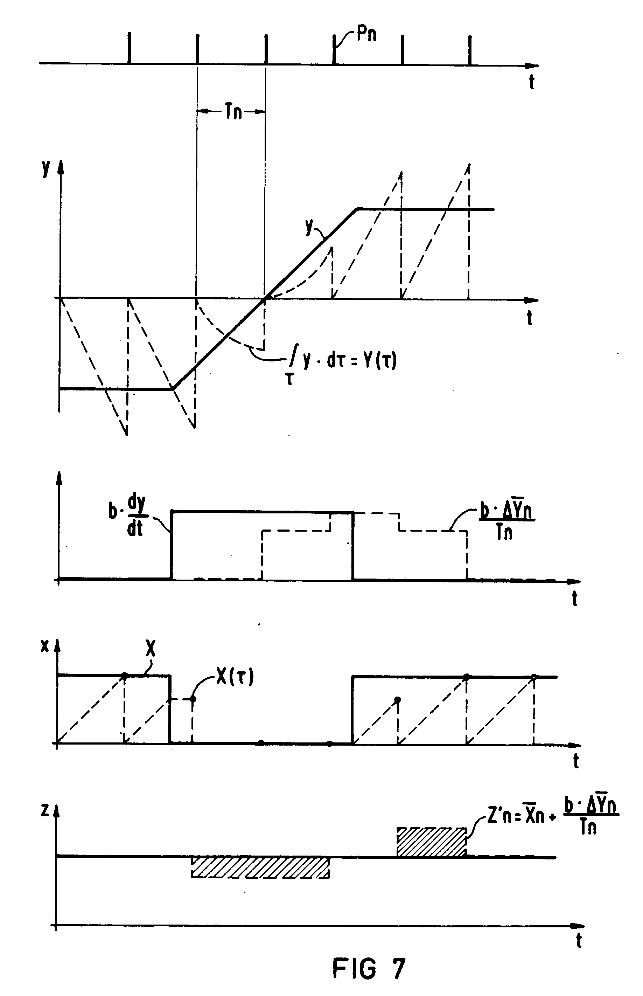

In FIG 6 ist dieses Prinzip auf das vorliegende Problem angewendet. Zur Bildung entsprechender Digitalsignale sind frequenzgesteuerte Oszillatoren 12 und 13 vorgesehen, deren Frequenz von den Größen x und y vorgegeben sind und deren Taktimpulse von Integratoren 14 und 15 gezählt werden. Diese Integratoren, die im Abtast-Takt Pn des Rechners Pm rückgesetzt werden, liefern während ihrer Integrationszeiten die in FIG 7 dargestellten Zählerstände X($\tau$), Y($\tau$). Sie werden im Takt Pn in den Rechner eingelesen. Dieser erhält somit als Eingangsvariablen die über eine Abtastperiode gemittelten Mittelwerte $\overline{X}$n, $\overline{Y}$n, aus denen die differenzenbildenden und addierenden Programmteile DP und AP nunmehr im Rechentakt Pn die Größe

$$Z'_n = \overline{X}n + b \cdot (\Delta \overline{Y}n/Tn)$$

errechnet.

Man erkennt aus FIG 7 nach wie vor wesentliche Abweichungen zwischen den errechneten Werten $Z'$n und dem theoretischen Wert z.

Der Erfindung liegt die Aufgabe zugrunde, auf einfache Weise Werte für die Funktion z derart zu errechnen, daß sich Abtastfehler praktisch nicht bemerkbar machen.

Diese Aufgabe wird gelöst durch ein Verfahren mit den Merkmalen des Anspruchs 1 bzw. eine Vorrichtung mit den Merkmalen des Anspruchs 3. Vorteilhafte Weiterbildungen der Erfindung sind in den Unteransprüchen gekennzeichnet.

Gemäß der Erfindung wird nicht der exakte Momentanwert z der Funktion x + a . dy/dt errechnet, sondern vielmehr ein über ein Abtastintervall Tn gemittelter Mittelwert $\overline{z}$ dieser Funktion. Die mathematische Struktur dieser Funktion legt es an sich nahe, zur Bildung des Mittelwertes den Differenzialquotienten dy/dt zur Steigerung der Genauigkeit in einem hochauflösenden Differenzenverfahren durch einen Differenzenquotienten von Momentanwerten zu ersetzen, wozu eine fortlaufende Momentanwert-Erfassung erforderlich wäre. Die Erfassung der Variablen x dagegen sollte keine hohe zeitliche Auflösung erfordern, also keine fortlaufende Abtastung des Momentanwertes. Gemäß der Erfindung wird jedoch innerhalb des Abtastintervalles Tn in einem integralen Abtastverfahren der Mittelwert $\bar{x}$ = 1/Tn $\int$x.dt gebildet, während in einem Momentanwert-Abtastverfahren nur die Momentanwerte y- und y+ am Anfang und Ende des Abtastintervalls gebildet werden. In einem Mikrorechner wird dann das Signal $\bar{z}$ nach dem Zusammenhang $\bar{z}$ = $\bar{x}$ + b/Tn (y+ - y-) gebildet.

Anhand von 4 weiteren Figuren und zweier Ausführungsformen wird die Erfindung näher erläutert. Es zeigen:

FIG 1 bis FIG 7     bereits erläuterte Möglichkeiten, die das Problem nicht befriedigend lösen,
FIG 8     eine bevorzugte Anwendung der Erfindung,
FIG 9     die Erfindung betreffende Einzelheiten der FIG 8,
FIG 10     eine andere vorteilhafte Ausführungsform der Vorrichtung nach der Erfindung und
FIG 11     die dabei auftretenden Signale.

Anwendungsgebiet ist ein Verfahren zum Betrieb einer Maschine mit einer Steuereinrichtung, der neben anderen Signalen wie z.B. Sollwerten eine Rechengröße zugeführt ist, die eine Summe aus mindestens zwei Summanden enthält, wobei der erste Summand einer Zustandsgröße der Maschine und der zweite Summand der zeitlichen Ableitung der gleichen Zustandsgröße oder einer anderen Zustandsgröße zugeordnet ist. Dabei sind einer Recheneinrichtung, die der Bildung des Summen-Signals dient, den Summanden zugeordnete Eingangsgrößen, die aus an der Maschine oder der Steuereinrichtung abgegriffenen Signalen gebildet sind, zugeführt und die Eingangsgrößen werden in einem vorgegebenen Rechentakt verarbeitet. Die Erfindung sieht dabei vor, daß aus der dem ersten Summanden zugeordneten Eingangsgröße das Integral der zugeordneten Zustandsgröße, integriert über eine Periode des Rechentaktes, und aus der dem zweiten Summanden zugeordneten Eingangsgröße die Differenz der Momentanwerte der zugeordneten Zustandsgröße am Ende und zu Beginn einer Periode des Rechentaktes gebildet werden. Das Integral und die Differenz werden dann im Rechentakt addiert, um die Rechengröße für die Steuereinrichtung zu bilden.

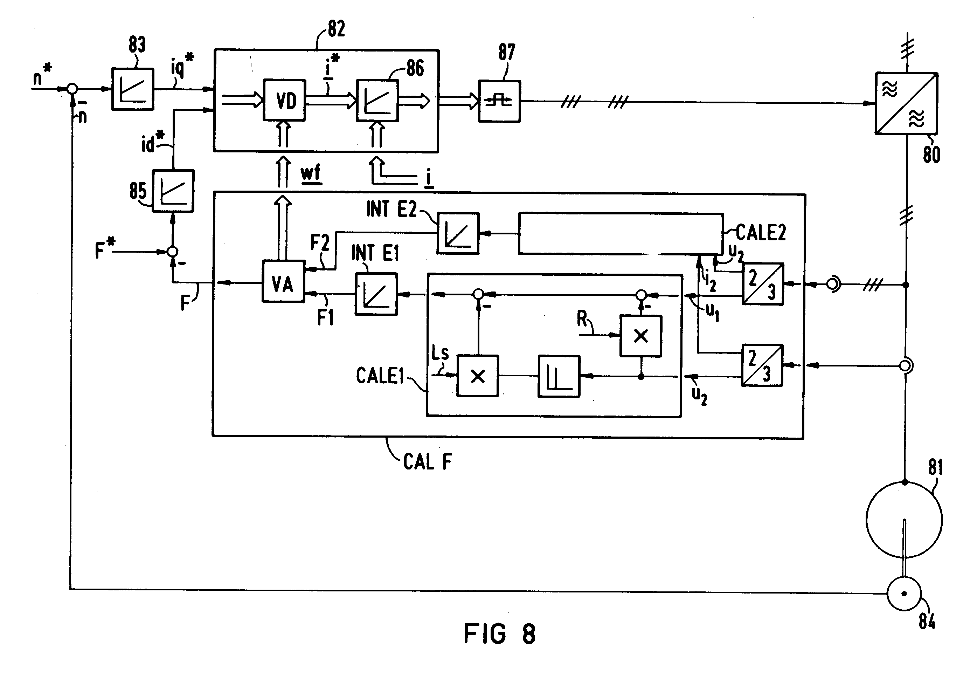

Dies ist in FIG 8 am Beispiel einer über einen Stromrichter 80 gespeisten Drehstrommaschine 81 (Synchronmaschine oder Asynchronmaschine) dargestellt, die feldorientiert geregelt wird.

Das Prinzip der feldorientierten Regelung ist hierbei nur schematisch dargestellt. Charakteristisch ist, daß die Steuereinrichtung 82 einen Sollwert iq* für die zur Feldachse senkrechte Komponente des Ständerstromvektors enthält, die z.B. am Ausgang eines Drehzahlreglers 83 abgegriffen sein kann, der vom Sollwert n* und dem an einer Tachomaschine 84 abgegriffenen Drehzahl-Istwert n gespeist ist. Dieser feldorientierte Stromkomponenten-Sollwert iq* bestimmt den Wirkstrom und damit das Drehmoment der Maschine, während ein Sollwert id* für die zur Feldachse senkrechte Komponente den Fluß der Maschine bestimmt und von einem Flußregler 85 vorgegeben werden kann, der von einem Flußsollwert F* und einem an einem Flußrechner CALF abgegriffenen Fluß-Istwert gespeist ist. Die Sollwerte iq* und id* bestimmen somit einen Soll-Stromvektor bezüglich der Feldachse des Flusses, und kann mittels eines den Flußwinkel wf bestimmenden Signals in ein ständerorientiertes (d.h. ruhendes) Koordinatensystem transformiert werden. Diese Koordinatentransformation kann auf verschiedene Weise vorgenommen und mit einer unterlagerten Stromregelung kombiniert werden. In FIG 8 ist dies dadurch angedeutet, daß einem Vektordreher VD die feldorientierten Komponenten sowie cos wf und sin wf, d.h. die Komponenten eines die Feldachse im ständerorientierten Koordinatensystem beschreibenden Einheitsvektors wf zugeführt sind. Hinter dem Vektordreher ist ein Stromregler 86 dargestellt, um den durch geeignete Meßgrößen erfaßten Strom-Istvektor $\bar{i}$ auf den ins ständerorientierte Koordinatensystem transformierten Strom-Sollvektor $\bar{i}$* zu regeln. Auf Einzelheiten der Steuereinrichtung ist verzichtet, insbesondere sind nachfolgende Bauteile nicht dargestellt, die die Ausgangssignale des Stromreglers 86 in die Steuerspannung eines den Umrichter 80 ansteuernden Steuersatzes 87 umwandeln.

Die feldorientierte Steuereinrichtung 82 und der ggf. vorgesehene Flußregler 85 benötigen somit Informationen über den Vektor des Flusses, die vom Flußrechner CALF geliefert werden müssen. Dem in FIG 8 dargestellten Flußrechner werden Meßwertsignale für die Spannung und den Strom der Maschine 81 zugeführt, die mittels 3/2-Komponentenwandlern in orthogonale Signale i1, i2 bzw. u1, u2 für die ständerorientierten Komponenten des Strom-Istvektors $\bar{i}$ und des Spannungs-Istvektors $\bar{u}$ umwandelt werden. Diese Komponenten werden mittels EMK-Komponenten-Rechnern CALE1 und CALE2 nach den eingangs erwähnten Beziehungen verarbeitet und mit Integratoren INT1, INT2 in die Komponenten F1 und F2 des Flußvektors umgerechnet. Auf die Integratoren kann auch verzichtet werden, wenn der Flußvektor näherungsweise durch den einer Drehstrecke unterworfenen EMK-Vektor ersetzt wird. Der Betrag und die Richtung des Flußvektors geben dann den Fluß-Istwert F und den Vektor wf, die z.B. mittels eines Vektoranalysators VA errechnet werden können.

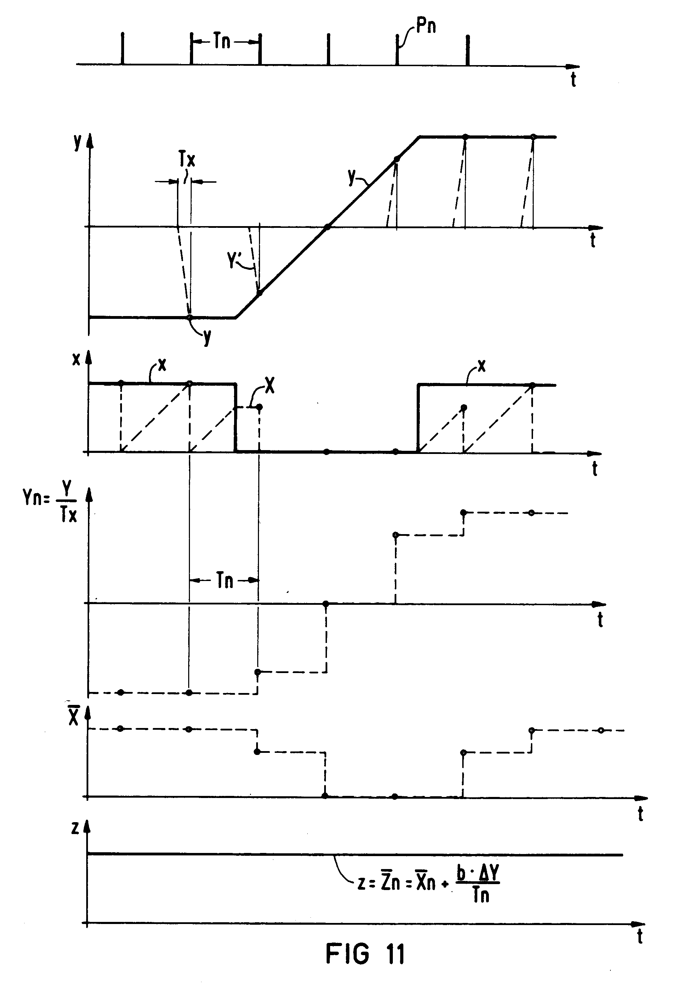

In FIG 9 ist ein Mikrorechner dargestellt, der als Flußrechner CALF die Berechnung der Komponenten des EMK-Vektors bzw. Flußvektors aus den Komponenten u1 und i1 des Spannungs-Istvektors übernimmt.

Dem Mikrorechner 90 ist zur Berechnung der einen Komponente $e_1$ des EMK-Vektors an einem Eingang ein Digitalwert zugeführt, der dem über ein Proportionalglied PP geführten Istwert-Signal für die Stromkomponente i1 entspricht und z.B. mittels eines nach einem Momentanwertverfahren arbeitenden Digital/Analog-Umsetzer DA1 gewonnen werden kann, sofern nicht bereits der Momentanwert dieser Stromkomponente in digitaler Form vorliegt. Ein Zeitimpulsgeber CLK bestimmt den Rechentakt und die Abtastperiode Tn des Rechners. In der allgemeinen Formel $z = x + b \cdot (dy/dt)$ ist daher für b der Parameter L der Streuinduktivität gesetzt, und der Momentanwert-Umsetzer DA1 liefert anstelle des analogen Signals $i_1$ den entsprechenden digitalisierten Momentanwert Y, der in diesem Fall bereits mit dem Parameter b = L bewertet und durch die Abtastperiode Tn dividiert ist.

Dieser Momentanwert wird zu Beginn und Ende des Abtastintervalls als Wert y– und y+ abgetastet und einem addierenden Programmteil AP zugeführt. Diesem Programmteil AP wird ferner nach Beendigung eines Abtastintervalls ein Digitalwert $\overline{X}n$ zugeführt, der dem Integral der Spannungs-Istvektorkomponente u1 und der mit dem Parameter des ohmschen Ständerwiderstandes R bewerteten Strom-Istvektorkomponente i1 entspricht. Zur Bildung dieses Integrals ist in FIG 9 ein spannungsgesteuerter Oszillator OSZ dargestellt, dessen Ausgangsimpulse von einem Zähler CT gezählt werden, wobei dieser Zähler im Takt der Abtastperiode Tn ausgelesen und rückgesetzt wird.

Häufig sind den Oszillatoren der FIG 9 entsprechende Spannungs/Frequenz-Umsetzer bereits in die Meßglieder am Ort der Messung integriert, so daß die Meßsignale bereits in Form entsprechender binärer Taktimpulse übertragen werden. Der Mikrorechner 90 muß dann lediglich an den entsprechenden Eingängen eine Integration der Taktimpulse vornehmen, die in FIG 9 softwaremäßig im Mikrorechner 90 selbst durchgeführt wird.

Der Zähler CT bildet somit am Ende des Abtastintervalles Tn das digitale Integral $\overline{X}n$ des analogen Momentan-Signals $x = (u_1 - R \cdot i_1)$. Zusätzlich ist bei FIG 9 vorgesehen, den Zähler CT bereits am Anfang des Abtastintervalles auf den Startwert (-y–) zu setzen, während der addierende Programmteil AP am Ende des Abtastintervalles durch Addition von y+ das Digitalsignal

$$\overline{Z} = \overline{X}n + b \cdot \frac{\Delta Yn}{Tn}$$

bildet. $\overline{X}n$ ist dabei der in einem integralen Abtastverfahren gebildete, digitalisierte Mittelwert $\frac{1}{Tn} \int x\,dt$ des Analogsignals x, während $\Delta Yn$ die Differenz der digitalisierten Momentanwerte des Analogsignals y am Anfang und Ende des Abtastintervalls ist.

Zum Zeitpunkt $t = t_0$ am Ende des Abtastintervalls entspricht somit das Digitalsignal $\overline{Z}$ der Funktion

$$\frac{1}{Tn} \int_{Tn} x(t)\,dt + b \cdot \frac{y(t = t_0) - y(t = t_0 - Tn)}{Tn} =$$

$$\frac{1}{Tn} \int_{Tn} (u_1(t) - R \cdot i_1(t))\,dt - L\,\frac{i_1(t = t_0) - i_1(t = t_0 - Tn)}{Tn} \cdot$$

Dies ist der Mittelwert der EMK-Komponente $e_1$. Da die zeitabhängigen Momentanwertsignale $i_1(t)$ des Stromes und $u_1(t)$ der Spannung abgetastet werden, ist die Exaktheit des Mittelwertes nur von der Auflösung des Momentanwert-Umformers DA1 und des spannungsgesteuerten Oszillators OSZ zur integralen Abtastung abhängig, ohne daß Differenzierfehler auftreten.

Für die Komponente $e_2$ des EMK-Vektors sieht der Flußrechner 90 die gleichen Elemente vor. Im Vektoranalysator VA können dann der Winkel $\epsilon$ = arc tan $e_2/e_1$ bzw. die Richtungskomponenten $\sin\epsilon$ und $\cos\epsilon$ und der Betrag $E = \sqrt{e_1{}^2 + e_2{}^2}$ des EMK-Vektors gebildet werden. Da wegen der Beziehung $d\,\psi dt$ = e der Flußvektor $\psi$ aus dem EMK-Vektor e näherungsweise durch eine Drehstreckung mit dem Amplitudenfaktor $(d\epsilon/dt)^r$ und dem Drehwinkel 90° hervorgeht, bestimmt der Vektoranalysator VA praktisch den Flußvektor.

Das integrale Abtastverhalten kann auch mit einem von einem Spannungs/Frequenz-Umsetzer $UF'$ gespeisten Integrator $CT'$ erfolgen, der einem entsprechenden Rechenteil 100 vorgelagert ist, wie FIG 10 zeigt. Dieser Integrator wird dann im Takt Pn ausgelesen und rückgesetzt. Dabei ist dargestellt, daß auch das Momentanwert-Abtastverfahren für das Signal y mittels eines entsprechenden Spannungs-/Frequenz-Umsetzers $UF''$ und dem nachgeschalteten Zähler $CT''$ erfolgen kann. Dieser Zähler $CT''$ ist durch die Impulse Px eines Zusatztaktgebers auslesbar und rücksetzbar.

FIG 11 zeigt zunächst die Impulse Pn, die das Abtastintervall Tn für den Mikrorechner 100 festlegen. Darunter ist ein Verlauf des Analogsignals y und die Periodendauer Tx dargestellt und gezeigt, wie der Zählerstand $Y'$ innerhalb des Zeitintervalls Tx bis zum Endwert Y hochläuft. Der Frequenzbereich des Umsetzers $UF''$ ist derart an die Periode Tx angepaßt, daß der zum Endwert gehörende Quotient Y/Tx mit hinreichender Genauigkeit den Mittelwert des Signals y im Intervall Tx angibt. Dieses Intervall Tx ist gegenüber dem Abtastintervall Tn derart klein gewählt, daß die im Takt von Pn eingelesenen Werte Yn = Y/Tx praktisch Momentanwerte darstellen. Sie werden von einer Speichereinrichtung MM festgehalten, die jeweils die Differenz $\Delta Y/Tn = (Y+ - Y-)/Tn$ der mit Abtastperiode Tn am Anfang und am Ende des Abtastintervalls abgelesenen Werte Y+ und Y- an den addierenden Speicherteil AP abgibt.

Ebenso ist in FIG 11 der Verlauf des Analogsignals x und des Zählerstandes X gezeigt, der am Ausgang des Zählers $CT'$ während des Intervalls Tn jeweils auf den Endwert $\overline{X} = \frac{1}{Tn} \int x dt$ ansteigt und an jedem Abtast-Intervallende ausgelesen wird.

Darunter sind die jeweils am Periodenende des Taktes Pn abgelesenen Momentanwerte Yn und $\overline{X}$ dargestellt, deren Werte entsprechend den gestrichelten Linien jeweils erst am Ende eines Abtastintervalles dem addierenden Programmteil AP neu eingegeben werden. Am Ausgang dieses Programmteils steht dann entsprechend der Funktion z der über das Intervall Tn gemittelte Mittelwert $\overline{Z} = \overline{X} + b \cdot \Delta Y/Tn$ an.

Die abzutastenden Signale können Summen beliebig vieler Einzelsignale sein und nach ihrer Abtastung auch noch mit anderen Signalen verarbeitet werden. Dabei kann vorteilhaft berücksichtigt werden, daß ihnen als Mittelwert ein Zeitverhalten $1/(1 + sTn)$ zuzuordnen ist. Sofern digitalisierte Momentanwerte und frequenzproportionale Impulse vorliegen, können auch auf die Wandler und Umsetzer der FIG 9 und 10 verzichtet werden; dies liegt z.B. dann vor, wenn entsprechende interne Signale an einer Regel-oder Steuereinheit einer Maschine abgegriffen werden können.

**Patentansprüche**

1. Verfahren zur Bildung eines aus zwei Signalen x und y abgeleiteten, der Funktion x + b . dy/dt mit einem Parameter b ≠ 0 entsprechenden Signals mittels eines Mikrorechners, wobei die Signale x und y Zustandsgrößen einer Maschine entsprechen und das so gebildete Signal einer Steuereinrichtung der Maschine als Rechengröße zugeführt wird, mit folgenden Merkmalen:
   - Zu Beginn eines Abtastintervalles wird ein erster digitaler Momentanwert des Signals y abgetastet,
   - für die Dauer des Abtastintervalles wird ein Signal gebildet, das dem integrierten Momentanwert des Signals x und somit dem Mittelwert $\overline{x}$ des Signals x innerhalb des Abtastintervalls entspricht,
   - am Ende des Abtastintervalls wird ein zweiter digitaler Momentanwert des Signals y abgetastet, und
   - im Mikrorechner wird aus dem Signal, das dem für die Dauer des Abtastintervalles integrierten Momentanwert des Signals x entspricht, und der Differenz der abgetasteten Momentanwerte des Signals y unter Berücksichtigung des Parameters b und der Abtastintervalldauer Tn gemäß der Beziehung $\overline{x} + \frac{b}{Tn} . \Delta y$ das abgeleitete Signal gebildet.

2. Verfahren nach Anspruch 1, **dadurch gekennzeichnet,** daß das Signal, das dem integrierten Momentanwert des Signals x entspricht, dadurch gebildet wird, daß die seit Beginn des Abtastintervalles aufgetretenen Impulse einer ersten Impulsfolge gezählt werden, deren Frequenz proportional dem Momentanwert des Signals x ist, und daß am Anfang und am Ende eines Abtastintervalls der Momentanwert des Signals y dadurch abgetastet wird, daß die Impulse einer zweiten Impulsfolge, deren Frequenz proportional dem Momentanwert des Signals y ist, für die Dauer eines Umsetzungsintervalles gezählt werden, das sehr viel kleiner ist als das Abtastintervall.

3. Vorrichtung zur Bildung eines aus Signalen x und y abgeleiteten, einer Funktion x + b . dy/dt entsprechenden Signals, wobei die Signale x und y Zustandsgrößen einer Maschine entsprechen und das so gebildete Signal einer Steuereinrichtung der Maschine als Rechengröße zugeführt wird, mit

a) einer Momentanwert-Abtasteinrichtung für den Momentanwert des Signals y,

b) Mittel zur integrierenden Abtastung des Signals x,

c) Mittel zur Abtaststeuerung, wobei ein erstes Momentanwertsignal y- für den Momentanwert des Signals y am Anfang eines Abtastintervalles, ein zweites digitales Momentanwertsignal y+ für den Momentanwert des Signals y am Ende des Abtastintervalles und ein integrales Signal $\bar{x}$ für das über das Abtastintervall integrierte Signal x bereitgestellt wird, wobei das integrale Signal $\bar{x}$ dem Mittelwert des Signales x im Abtastintervall entspricht, und

d) einem Mikrorechner, der die Differenz $\Delta y$ der beiden digitalen Momentanwertsignale y+ und y- mit dem integralen Signal $\bar{x}$ unter Berücksichtigung eines Parameters b ≠ 0 und der Abtastintervall-Dauer Tn gemäß der Beziehung $\bar{x} + \frac{b}{Tn} \cdot \Delta y$ verknüpft.

4. Vorrichtung nach Anspruch 3, **dadurch gekennzeichnet,** daß die Momentanwert-Abtasteinrichtung ein Analog/Digital-Umsetzer ist, dessen Umsetzungsintervall wesentlich kleiner als das Abtastintervall ist.

5. Vorrichtung nach Anspruch 3, **dadurch gekennzeichnet,** daß die integralen Abtastmittel eine Zähleinrichtung umfassen, die von den Abtaststeuermitteln rücksetzbar ist und die Impulse einer Impulsfolge zählen, deren Frequenz proportional dem Signal x ist.

**Claims**

1. Method for the formation of a signal derived from two signals x and y and corresponding with the function x + b . dy/dt with a parameter b ≠ 0 by means of a microcomputer, whereby the signals x and y correspond with state variables of a machine and the signal formed in this way is supplied to a control device of the machine as computational variable, having the following features:
   - at the beginning of a sampling interval a first digital instantaneous value of the signal y is sampled,
   - for the duration of the sampling interval a signal is formed which corresponds with the integrated instantaneous value of the signal x and thus with the mean value $\bar{x}$ of the signal x within the sampling interval,
   - at the end of the sampling interval a second digital instantaneous value of the signal y is sampled, and
   - in the microcomputer the derived signal is formed from the signal which corresponds with the instantaneous value of the signal x integrated for the duration of the sampling interval and the difference of the sampled instantaneous values of the signal y with consideration of the parameter b and the sampling-interval duration Tn in accordance with the equation $\bar{x} + b/Tn \cdot \Delta y$.

2. Method according to claim 1, characterized in that the signal which corresponds with the integrated instantaneous value of the signal x is formed in that the pulses of a first pulse sequence, having occurred since the beginning of the sampling interval, are counted, the frequency of which is proportional to the instantaneous value of the signal x, and in that at the beginning and at the end of a sampling interval the instantaneous value of the signal y is sampled in that the pulses of a second pulse sequence, the frequency of which is proportional to the instantaneous value of the signal y, are counted for the duration of a conversion interval which is very much smaller than the sampling interval.

3. Device for the formation of a signal derived from signals x and y and corresponding with a function x + b . dy/dt, whereby the signals x and y correspond with state variables of a machine and the signal formed in this way is supplied to a control device of the machine as computational variable, having
   a) an instantaneous-value sampling device for the instantaneous value of the signal y,
   b) means for the integrating sampling of the signal x,
   c) means for the sampling control, whereby a first instantaneous-value signal y- for the instantaneous value of the signal y is prepared at the beginning of a sampling interval, a second digital instantaneous-value signal y+ for the instantaneous value of the signal y is prepared at the end of the sampling interval and an integral signal $\bar{x}$ for the signal x integrated over the sampling interval is prepared, whereby the integral signal $\bar{x}$ corresponds with the mean value of the signal x in the sampling interval, and
   d) a microcomputer, which links the difference $\Delta y$ of the two digital instantaneous-value signals y+ and y- to the integral signal $\bar{x}$ with consideration of a parameter b ≠ 0 and the sampling-interval duration Tn in accordance with the equation $\bar{x} + b/Tn \cdot \Delta y$.

**4.** Device according to claim 3, characterized in that the instantaneous-value sampling device is an analog-to-digital converter, the conversion interval of which is substantially smaller than the sampling interval.

**5.** Device according to claim 3, characterized in that the integral sampling means comprise a counting device, which can be reset by the sampling control means, and which counts the pulses of a pulse sequence, the frequency of which is proportional to the signal x.

**Revendications**

**1.** Procédé pour former un signal obtenu à partir de deux signaux x et y et qui correspond à la fonction x + b . dy/dt avec un paramètre b ≠ 0, à l'aide d'un microordinateur, selon lequel les signaux x et y correspondent à des grandeurs d'état d'une machine et le signal ainsi formé est envoyé en tant que grandeur de calcul à un dispositif de commande de la machine, présentant les caractéristiques suivantes :
   - au début d'un intervalle d'échantillonnage, une première valeur numérique instantanée du signal y est échantillonnée,
   - pendant la durée de l'intervalle d'échantillonnage, un signal est formé, qui correspond à la valeur instantanée intégrée du signal x et par conséquent à la valeur moyenne $\bar{x}$ du signal x pendant l'intervalle d'échantillonnage,
   - à la fin de l'intervalle d'échantillonnage, une seconde valeur numérique instantanée du signal y est échantillonnée, et
   - dans le micro-ordinateur, le signal dérivé est formé à partir du signal, qui correspond à la valeur instantanée du signal x, intégré pendant la durée de l'intervalle d'échantillonnage, et à partir de la différence des valeurs instantanées échantillonnées du signal y en tenant compte du paramètre b et de l'intervalle d'échantillonnage Tn conformément à la relation $\bar{x} + \frac{b}{Tn} . \triangle y$.

**2.** Procédé suivant la revendication 1, caractérisé par le fait que le signal qui correspond à la valeur instantanée intégrée du signal x, est formé grâce au fait que des impulsions, qui apparaissent depuis le début de l'intervalle d'échantillonnage, d'une première suite d'impulsions sont comptées, la fréquence de ces impulsions étant proportionnelle à la valeur instantanée du signal x, et qu'au début et à la fin de l'intervalle d'échantillonnage, la valeur instantanée du signal y est échantillonnée par le fait que les impulsions d'une seconde suite d'impulsions et dont la fréquence est proportionnelle a' la valeur instantanée du signal y, sont comptées pendant la durée d'un intervalle de conversion, qui est beaucoup plus court que l'intervalle d'échantillonnage.

**3.** Dispositif pour former un signal obtenu à partir des signaux x et y et correspondant à une fonction x + b . dy/dt, dans lequel les signaux x et y sont des grandeurs d'état correspondant à des grandeurs d'état d'une machine et le signal ainsi formé est envoyé en tant que grandeur de calcul à un dispositif de commande de la machine, et comportant
   a) un dispositif d'échantillonnage de la valeur instantanée du signal y,
   b) des moyens pour réaliser l'échantillonnage du signal x avec intégration,
   c) des moyens de commande de l'échantillonnage, un premier signal de valeurs instantanées y- pour la valeur instantanée du signal y au début d'un intervalle d'échantillonnage, un second signal numérique de valeurs instantanées y+ pour la valeur instantanée du signal y à la fin de l'intervalle d'échantillonrage et un signal intégral $\bar{x}$ pour le signal x intégré pendant l'intervalle d'échantillonnage et un signal intégral $\bar{x}$ correspond à la valeur moyenne du signal x pendant un intervalle d'échantillonnage, étant formés, et
   d) un micro-ordinateur, qui combine la différence $\triangle y$ des deux signaux numériques de valeurs instantanées y+ et y- au signal intégral $\bar{x}$ en tenant compte d'un paramètre b différent de zéro et de la durée Tn de l'intervalle d'échantillonnage conformément à la relation $\bar{x} + \frac{b}{Tn} . \triangle y$.

**4.** Dispositif suivant la revendication 3, caractérisé par le fait que le dispositif d'échantillonnage de la valeur instantanée est un convertisseur analogique/numérique, dont l'intervalle de conversion est nettement plus court que l'intervalle d'échantillonnage.

**5.** Dispositif suivant la revendication 3, caractérisé par le fait que les moyens d'échantillonnage à action intégrale comprennent un dispositif de comptage qui peut être ramené à zéro par les moyens de

8

commande d'échantillonnage et qui compte les impulsions d'une suite d'impulsions, dont la fréquence est proportionnelle au signal x.

FIG 1

FIG 2

FIG 3

FIG 4

FIG 5

FIG 6

FIG 9

FIG 10

FIG 7

FIG 8

$$z = \overline{Z}n = \overline{X}n + \frac{b \cdot \Delta Y}{Tn}$$

FIG 11